# EUROPEAN PATENT APPLICATION

(11) **EP 3 456 445 A1**
(43) Date of publication of application: **20.03.2019**
(21) Application number: 18194281.4
(22) Date of filing: 13.09.2018
(51) Int. Cl.: B23B 29/034, B23Q 17/22, B23Q 17/20, G05B 19/401

(54) **INTEGRATED BORE PROFILING TOOL AND METHOD**

(30) Priority: 13.09.2017 US 201762557899 P
(71) Applicant: Services Pétroliers Schlumberger, 75007 Paris (FR); Schlumberger Technology B.V., 2514 JG The Hague (NL)
(72) Inventor: FITZGERALD, Christopher Lee, Conroe, Texas 77304 (US); SOH, E-Kiang, Qingpu EPZ, Shanghai 201707 (CN); LUMSDEN, Ross, Qingpu EPZ, Shanghai 201707 (CN); SPEECHLEY, Paul, Qingpu EPZ, Shanghai 201707 (CN)
(74) Representative: Schlumberger Intellectual Property Department

(57) **Abstract**

An apparatus that includes a tool head; an insert that is coupled to the head and configured to engage an inner diameter of a workpiece, so as to machine the workpiece; a boring bar or drill tube coupled to the head, the boring bar or drill tube configured to extend through a guide bore in the workpiece; and a measuring device that is positioned proximate to the head and configured to measure a radial dimension, an axial dimension, or both of the inner diameter. The head may include a plurality of inserts, wherein the plurality of inserts are selectable such that the inserts are engageable with the inner diameter of the workpiece. The measuring device may include a contact-based measuring device.

## Description

### Cross Reference to Related Applications

This application claims the benefit of U.S. Provisional Application Ser. No. 62/557,899 entitled Integrated Bore Profiling Tool and Method, filed September 13, 2017.

### Field of the Invention

Disclosed embodiments relate generally to deep-hole drilling or Boring and Trepanning Association (BTA) type machines ("borer machines" or "boring machines").

### Background

Drill collars are components used in drill strings in the oilfield. The drill collars often have multiple internal features that may be machined using between 10 and 30 boring heads ("tool heads") on deep-hole drilling or Boring and Trepanning Association (BTA) type machines ("borer machines" or "boring machines"). The tool heads used for drill collars may be capable of machining a single or a few features, and therefore multiple heads are used to produce more complex profiles in a workpiece.

Programmable, e.g., computer numerical controlled (CNC), inner diameter (ID) profiling tools that can perform single point cutting operations make it possible to machine a large variety of features, as long as the tool can be supported adequately in a guide bore of a pre-determined size. When machining a workpiece using existing ID profiling tools, a relatively complex, time-intensive routine is followed. The guide bore diameters are pre-set, a test cut is made, the tool is removed to check actual size of the cut, offset compensation is performed, the workpiece is recut, the tools is removed, and the workpiece is checked again. Any change to a guide bore calls for guide bushes to be re-ground, or replaced. To verify tool wear and actual machined feature dimensions, the tool is removed from the workpiece bore. In deep-hole drilling, the time taken to remove a tool, measure, and re-insert the tool can add up and increase the cost of the process of machining the workpiece.

### Summary

An example embodiment may include an apparatus that includes a tool head; an insert that is coupled to the head and configured to engage an inner diameter of a workpiece, so as to machine the workpiece; a boring bar or drill tube coupled to the head, the boring bar or drill tube configured to extend through a guide bore in the workpiece; and a measuring device that is positioned proximate to the head and configured to measure a radial dimension, an axial dimension, or both of the inner diameter. In an example embodiment, the head may include a plurality of inserts, wherein the plurality of inserts are selectable such that the inserts are engageable with the inner diameter of the workpiece. The measuring device may include a contact-based measuring device. The head, the insert, and the measuring device may be retractable. An example embodiment may also include adjustable support devices that extend radially from the tool, so as to centralize the tool with respect to the inner diameter of the workpiece. The adjustable support devices may be extendable and retractable radially to adjust a position of a centerline of the tool with respect to the workpiece. The head may be configured to perform machining operation at a position that is an axial length from an end of the workpiece, the axial length being at least 14 times of a diameter defined by the inner diameter.

Another example embodiment may include a method that includes performing a first machining operating in an inner diameter of a workpiece using a first insert coupled to a head of a deep-hole boring tool; engaging a second insert of the head, without removing the head from the inner diameter; performing a second machining operation in the inner diameter using the second insert, after engaging the second insert; measuring a dimension of the inner diameter after the first machining operation, after the second machining operation, or both, without removing the head from the inner diameter; and adjusting a position of the tool in response to the measuring. An example method may also include wherein adjusting the position comprises extending or retracting one or more adjustable support members extending radially from the head, a boring bar or drill tube connected to the head, or both. In the foregoing method, adjusting the position may be selectively determined by a processor. An example method may further include rendering the inner diameter after the first machining operation and/or the second machining operation.

Another example embodiment may include a system that includes a processor; a computer readable medium comprising instructions which, when executed by the processor, cause the processor to carry out a method of: performing a first machining operating in an inner diameter of a workpiece using a first insert coupled to ahead of a hole boring tool; engaging a second insert of the head, without removing the head from the inner diameter; performing a second machining operation in the inner diameter using the second insert, after engaging the second insert; measuring a dimension of the inner diameter after the first machining operation, after the second machining operation, or both, without removing the head from the inner diameter; and adjusting a position of the tool in response to the measuring. In the foregoing system, adjusting the position may include extending or retracting one or more adjustable support members extending radially from the head, a boring bar or drill tube connected to the head, or both. The system may further include taking a plurality of measurements and rendering the inner diameter. The system may include a second processor that is communicatively coupled to the aforementioned processor.

### Brief Description of the Drawings

The accompanying drawings, which are incorporated in and constitute a part of this specification, illustrate embodiments of the present teachings and together with the description, serve to explain the principles of the present teachings. In the figures:
Figure 1A illustrates a cross-sectional, conceptual view of a deep-hole boring tool in a workpiece, according to an embodiment.
Figure 1B illustrates an enlarged view of a portion of Figure 1A, showing an on-board measuring tool of the deep-hole boring tool, according to an embodiment.
Figure 1C illustrates another enlarged view of the deep-hole boring tool, showing a compressed-air stream provided for use with the on-board measuring tool, according to an embodiment.
Figure 2 illustrates another side, cross-sectional, conceptual view of the deep-hole boring tool in the workpiece, depicting movable support units positioned along the tool, according to an embodiment.
Figure 3 illustrates a cross-sectional, conceptual view of the deep-hole boring tool, depicting an insert changing device of the boring tool, according to an embodiment.
Figures 4A and 4B illustrate side, cross-sectional, conceptual views of the deep-hole boring tool positioned in a workpiece, and being retracted therefrom, according to an embodiment.
Figure 5 illustrates another side, cross-sectional, conceptual view of the deep-hole boring tool in the workpiece, according to an embodiment.
Figure 6 illustrates a flowchart of a method for machining a profile of a deep-hole bore, e.g., using the deep-hole boring tool, according to an embodiment.

### Detailed Description

Reference will now be made in detail to embodiments, examples of which are illustrated in the accompanying figures. In the following detailed description, numerous specific details are set forth in order to provide a thorough understanding of the present disclosure. However, it will be apparent to one of ordinary skill in the art that the system and method disclosed herein may be practiced without these specific details.

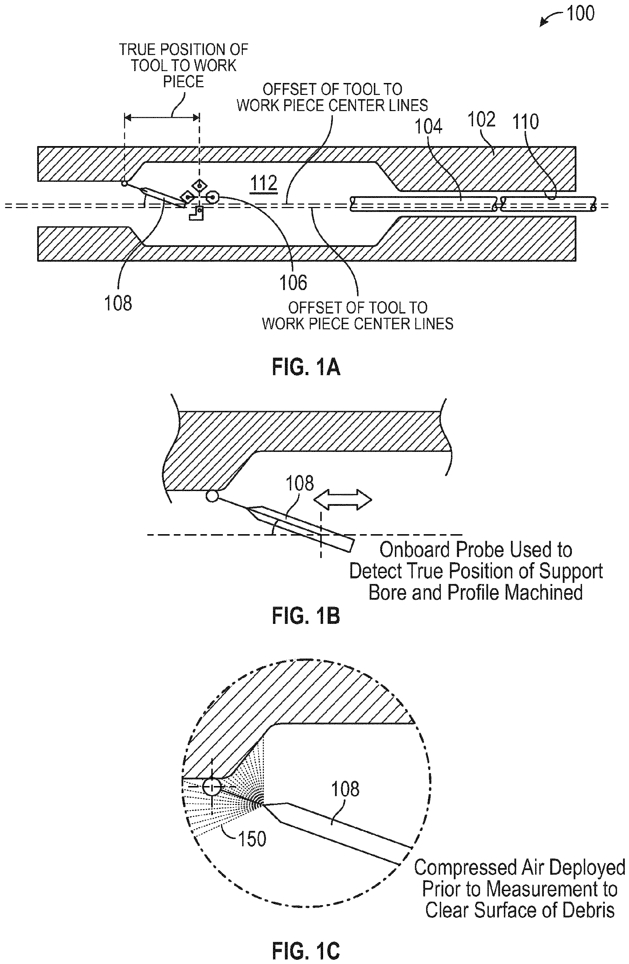

Figure 1A illustrates a side, cross-sectional, conceptual view of a deep-hole boring tool 100 positioned in a workpiece 102, according to an embodiment. The deep-hole boring tool 100 generally includes a drill tube 104 (also known as a boring bar) which may, in some embodiments, be configured to rotate a tool head 106 and/or a measuring device 108. The drill tube 104 and the tool head 106 may be connected together. Further, the tool head 106 may be retractable radially inwards, e.g., to about the same, or smaller, diameter as the drill tube 104.

The workpiece 102 may include a guide bore 110, which may be extended radially outwards to form a chamber 112. The guide bore 110 and/or the chamber 112 may extend relatively deep axially in the workpiece 102, as compared to more conventional tool forming devices. For example, the guide bore 110 and chamber 112 may extend from about 3 meters (about 10 feet) to about 10 meters (about 30 feet). Further, the diameter of the guide bore 110 versus the depth of the workpiece (i.e., horizontal in the illustration) may be on the order of 14:1, or greater.

As indicated in Figure 1B, the measuring device 108 (e.g., probe) may be used to determine a true position of the support bore and profile being machined. The measuring device 108 may be contact-based, so as to avoid issues related to high reflectivity and scatter of vision-based systems, and the presence of contaminants (swarf, cuttings, coolant) in the area under inspection. Further, as shown in Figure 1C, the tool 100 may provide a compressed air stream 150 prior to measuring to clear the surface of debris.

In an embodiment, the measuring device 108 may take a plurality or a "cloud" of measurements, which may be communicated to a processor. The processor, in turn, may create a rendering (e.g., three-dimensional rendering) of the profile of the inner diameter surface of the workpiece 102. In an embodiment, the measuring device 108 may have a radius measurement accuracy of ±25 µm, and a radius measurement resolution of 25 µm. Further, the measurement device 108 may have an axial measurement accuracy of ±50 µm and an axial measurement resolution of 50 µm.

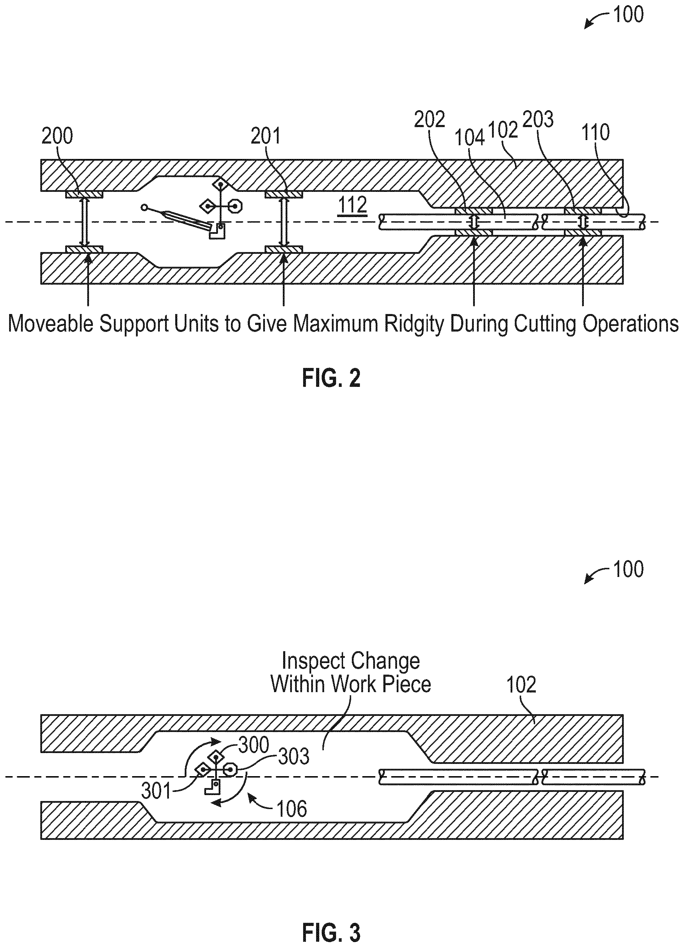

Figure 2 illustrates another side, cross-sectional, conceptual view of the deep-hole boring tool 100 in the workpiece 102, according to an embodiment. After the inspection of the guide bore 110 (e.g., in the chamber 112), the tool 100 may be configured to self-adjust a depth of cut to compensate for deviations in cutting-head position due to the actual tolerance of the guide bore 110 and the true position of the tool 100 cutting point. For example, the tool 100 may include one or more movable support units or feet (four are shown: 200, 201, 202, 203) positioned in the guide bore 110, e.g., shallower, deeper, or in the chamber 112, or a combination thereof. The support unites 200-203 may extend from the tool 100 body and/or from the drill tube 104. The movable support units 200 may be expandable radially, and thus may be able to adjust a centerline position of the tool 100.

Figure 3 illustrates another side, cross-sectional, conceptual view of the deep-hole boring tool 100 in the workpiece 102, according to an embodiment. The tool head 106 may be configured to employ one among several different cutting inserts (four are shown: 300-303) in a selectable manner, so as to perform two or more different machining operations. For example, the tool head 106 may include an indexing device that, e.g., using a servo-motor, allows for rotation of the inserts 300-303 into an engaged position, while the other inserts 300-303 of the set are in a disengaged position. In another embodiment, the inserts 300-303 may be retractable selectively, such that one among the several is engaged and the others are retracted. In yet another embodiment, the tool head 106 may carry several such inserts 300-303 and may be rotated with respect to the workpiece 102 such that the inserts 300-303 can be selectively engaged, while the others are spaced apart from the workpiece 102 by the orientation of the tool head 106.

The tool head 106 and/or the engaged insert 300 may be moved radially outward through the use of a servo-motor. Such servos may be powered by a battery that is on-board the tool 100. Further, the selectability may be enabled by two-way communication between the tool 100 and a processor that is outside the workpiece 102, e.g., through a wireless radio frequency (or any other suitable) communication link.

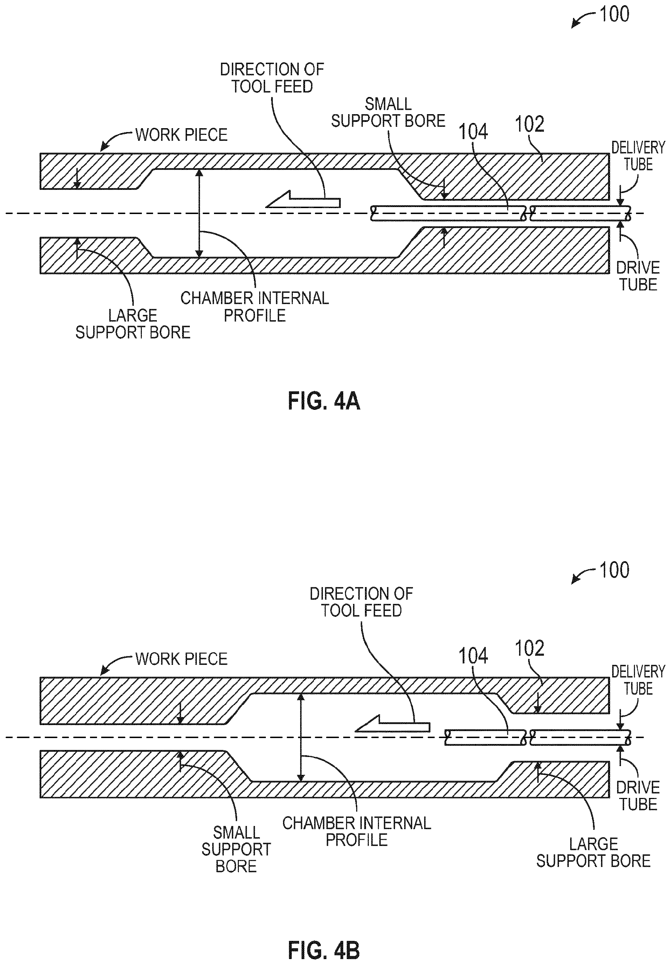

Figures 4A and 4B illustrate side, cross-sectional, conceptual views of the deep-hole boring tool 100 positioned in a workpiece 102, and being retracted therefrom, according to an embodiment. At the completion of the cutting cycle, the tool 100 is able to safely retract the onboard parts and/or equipment that might damage the workpiece 102 on tool retraction from the workpiece. If the retraction fails, e.g., due to damage or ingress of foreign bodies, a manual override may be available for tool recovery. This reduces the risk of scrapping the workpiece 102 due to damage sustained during tool retraction. When tip breakage detection is established on machined bore inspection, the onboard tip change function may be engaged for further machining without retracting the tool 100 from the workpiece 102 for a tool or insert change.

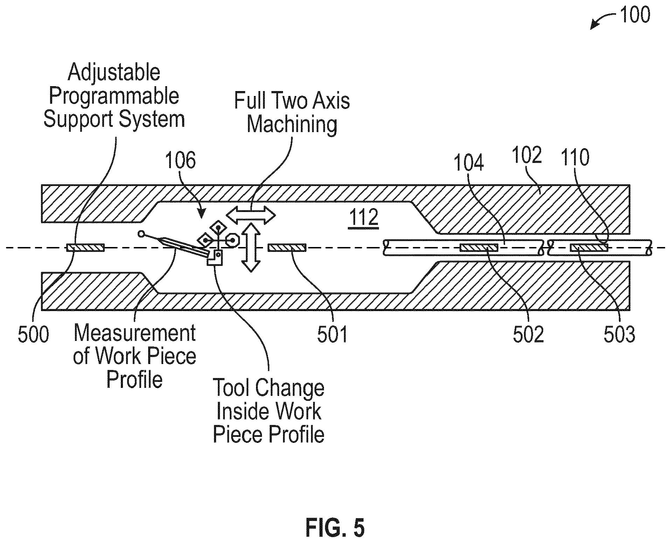

Figure 5 illustrates another side, cross-sectional, conceptual view of the deep-hole boring tool 100 in the workpiece 102, according to an embodiment. The tool 100 may be configured to adjust and adapt to a range of guide bores through multiple sets of guide pads (four shown: 500, 501, 502, 503) connected, e.g., to piezoelectric motors. These motors may allow for the precise expansion of the guide pads 500-503, enabling the tool 100 (including the head 106) to be centralized and stabilized for subsequent machining operations.

In some embodiments, the radial expansion and/or retraction of the insert cutting edges can be achieved by a boring machine numerical control through movement of a pushrod, or servomotor. Further, tool tip breakage and/or wear, can be monitored in real time. Simultaneously, machining parameters, such as temperature, pressure, vibration, and cutting harmonics, may be processed. This may enable a prediction of the finish of the machined surfaces based on the observed cutting parameters.

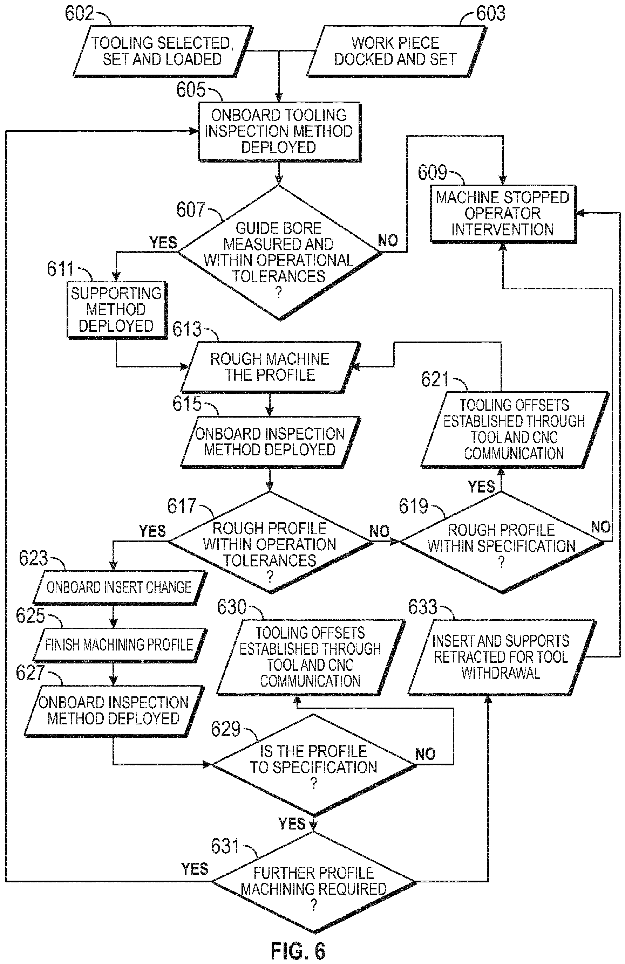

Figure 6 illustrates a flowchart of a method for machining a profile in a workpiece, such as using the deep-hole boring tool 100 in the workpiece 102, as described above, according to an embodiment. The specifics of the embodiment of the method are provided in the flowchart. However, in general, the method of employing the deep-hole boring tool 100 may include measuring the current state (shape, profile, etc.) of the bore, and thus making adjustments based on the actual shape and the position of the tool 100 with respect thereto. This contrasts with predictions and secondary measurements that are sometimes made with other types of boring tools.

According to an example method (600), (a) a tooling may be selected, set and loaded (602); and/or (b) a work piece may be docked and set (603). Then an onboard tooling inspection method may be deployed (605), and a guide bore may be measured to determine whether it is within operational tolerances (607). If not, then machining maybe stopped and/or an operator may intervene (609). If the guide bore is within operation tolerances, an example method may proceed to determining that a supporting method is deployed (611) and rough machining the profile (613). An onboard inspection method may be deployed (615) and a decision may be made as to whether the rough profile is within operation tolerances (617). If not, then a decision may be made as to whether a rough profile is within specification (619), and if it is not, then machining maybe stopped and/or an operator may intervene (609). If the rough profile is within operation tolerances, then an example method may proceed establish tooling offsets through tool and CNC communication (621) and rough machine the profile (613) and deploying an onboard inspection method (615) until the rough profile is within operation tolerances.

Once a rough profile is within operation tolerances, one or more of the following may take place: (a) an onboard insert change (623), (b) finish machining profile (625), and/or (c) onboard inspection method deployed (627). A determination may be made as to whether the profile is to specification (629). If no, then a loop may take place that involves (a) establishing tooling offsets through tool and CNC communication (630), (b) finishing machining profile (625), and (c) deploying an onboard inspection until a profile is to specification (627).

Once a profile is to specification, then a determination may be made as to whether further profile machining is required (631). If no, then insert and supports may be retracted for tool withdrawal (633), and machining may be stopped and/or an operator may intervene (609). If further profile machining is required, then an example method may return to onboard tooling inspection method deployed (605).

The method can also include using the tool to create its own offset, centralizing itself based on the diameter, and calculating tooling offset without having to separately inspect to measure what has been cut from the workpiece 102. The method may also include selecting one among several on-board tooling inserts, such that the tool 100 has the ability to perform different machining operations without being retracted and refitted with a different insert.

The method can also include retracting the cutting/supporting elements when installing or retrieving the tool 100. Further, the method can include adjusting adaptable guide pads, so as to adapt the guide diameters.

As used herein, the terms "inner" and "outer"; "up" and "down"; "upper" and "lower"; "upward" and "downward"; "above" and "below"; "inward" and "outward"; and other like terms as used herein refer to relative positions to one another and are not intended to denote a particular direction or spatial orientation. The terms "couple," "coupled," "connect," "connection," "connected," "in connection with," and "connecting" refer to "in direct connection with" or "in connection with via one or more intermediate elements or members."

The foregoing description, for purpose of explanation, has been described with reference to specific embodiments. However, the illustrative discussions above are not intended to be exhaustive or to limit the invention to the precise forms disclosed. Many modifications and variations are possible in view of the above teachings. Moreover, the order in which the elements of the methods described herein are illustrate and described may be re-arranged, and/or two or more elements may occur simultaneously. The embodiments were chosen and described in order to best explain the principals of the invention and its practical applications, to thereby enable others skilled in the art to best utilize the invention and various embodiments with various modifications as are suited to the particular use contemplated.

## Claims

1. An apparatus, comprising:
a tool head;
an insert that is coupled to the head and configured to engage an inner diameter of a workpiece for machining the workpiece;
a boring bar or drill tube coupled to the head, the boring bar or drill tube configured to extend through a guide bore in the workpiece; and
a measuring device that is positioned proximate to the head and configured to measure a radial dimension, an axial dimension, or both, of the inner diameter.

2. The apparatus of claim 1, wherein the head comprises a plurality of inserts, wherein the plurality of inserts are selectable such that the inserts are engageable with the inner diameter of the workpiece.

3. The apparatus of claim 1, wherein the measuring device comprises a contact-based measuring device.

4. The apparatus of claim 1, wherein the head, the insert, and the measuring device are retractable.

5. The apparatus of claim 1, further comprising adjustable support devices that extend radially from the tool, for centralizing the tool with respect to the inner diameter of the workpiece.

6. The apparatus of claim 5, wherein the adjustable support devices are extendable and retractable radially to adjust a position of a centerline of the tool with respect to the workpiece.

7. The apparatus of claim 1, wherein the head is configured to perform machining operation at a position that is an axial length from an end of the workpiece, the axial length being at least 14 times of a diameter defined by the inner diameter.

8. A method comprising:
performing a first machining operating in an inner diameter of a workpiece using a first insert coupled to a head of a boring tool;
engaging a second insert of the head, without removing the head from the inner diameter;
performing a second machining operation in the inner diameter using the second insert, after engaging the second insert;
measuring a dimension of the inner diameter after the first machining operation, after the second machining operation, or both, without removing the head from the inner diameter; and
adjusting a position of the tool in response to the measuring.

9. The method of claim 8, wherein adjusting the position comprises extending or retracting one or more adjustable support members extending radially from the head, a boring bar or drill tube connected to the head, or both.

10. The method of claim 9, wherein adjusting the position is selectively determined by a processor.

11. The method of claim 10, further comprising rendering the inner diameter after the first machining operation and/or the second machining operation.

12. A system comprising:
a processor;
a computer readable medium comprising instructions which, when executed by the processor, cause the processor to carry out a method of:
performing a first machining operating in an inner diameter of a workpiece using a first insert coupled to a head of a hole boring tool;
engaging a second insert of the head, without removing the head from the inner diameter;
performing a second machining operation in the inner diameter using the second insert, after engaging the second insert;
measuring a dimension of the inner diameter after the first machining operation, after the second machining operation, or both, without removing the head from the inner diameter; and
adjusting a position of the tool in response to the measuring.

13. The system of claim 12, wherein adjusting the position comprises extending or retracting one or more adjustable support members extending radially from the head, a boring bar or drill tube connected to the head, or both.

14. The system of claim 12, wherein the method further comprises taking a plurality of measurements and rendering the inner diameter.

15. The system of claim 12, wherein the processor is a first processor, and further comprising a second processor that is communicatively coupled to the first processor.
